# EUROPEAN PATENT SPECIFICATION

(11) **EP 1 494 566 B1**
(45) Date of publication and mention of the grant of the patent: **21.06.2006**
(21) Application number: 02726414.2
(22) Date of filing: 18.04.2002
(51) Int. Cl.: A47J 31/44, A47J 31/46

(54) **MACHINE FOR PREPARING BEVERAGES**
MASCHINE ZUM ZUBEREITEN VON GETRÄNKEN
MACHINE POUR PREPARER DES BOISSONS

(43) Date of publication of application: 12.01.2005
(73) Proprietor: Tuttoespresso S.p.a., 21042 Caronno Pertusella (IT)
(72) Inventor: MAJER DOGLIONI, Luca, I-20145 Milan (IT)
(74) Representative: Valentini, Giuliano
(86) International application number: PCT/IT2002/000249
(87) International publication number: WO 2003/086157

(56) References cited:
- IT-B- 1 230 524
- US-A- 5 896 806

## Description

### Technical Field of the Invention

The present invention relates to a machine for the preparation of beverages, for instance a machine suitable for the preparation of a beverage starting from disposable containers, such as cartridges or the like.

### Background of the Invention

Generally, in the machines of the known art of this type, at least one dispensing unit is present that is housed in the inside of an envelope. In particular, the dispensing unit comprises at least one collecting unit which can be removed for the necessary cleaning operations. The mounting of the collecting device in the dispensing unit is generally realized by means of a bayonet-coupling.

The same collecting device has in the lower part a dispensing duct wherefrom the beverage prepared comes out to be in its turn conveyed through a duct that ends in the dispensing spout. The latter is obtained in an underlying covering plate that can be removed to allow the access to, and the removal of, the collecting device.

As is obvious, the access to the collecting device in the mounting and removal operations is poorly practical and particularly tiresome. The collecting device, in fact, can be reached only by operating manually from the bottom of the dispensing duct. Besides being tiresome from the point of view of the operations necessary to place the collecting device in a bayonet-coupling system, it is worth stressing that there may arise health problems, as the "clean" collecting device is re-positioned by operating with a hand on the dispensing duct of the collecting device.

A general object of the present invention is to provide a machine for dispensing beverages such as to render easier and safer for health the frequent operations which the collecting device is submitted to.

A particular object of the present invention is to provide a machine for dispensing beverages such as to facilitate the access to the collecting device.

Another particular object of the present invention is to provide a machine for dispensing beverages such as to facilitate the mounting and removal of the collecting device.

### Summary of the invention

These objects are achieved by the present invention that relates to a machine for the preparation of beverages, of the type comprising at least one dispensing unit housed in the inside of an envelope, said dispensing unit comprising at least one removable collecting device whose access is through at least one access window obtained in the envelope, and at least one removable covering element to occlude or selectively free the access window, characterized in that the access window faces the collecting device, and that the at least one covering element and the at least one access window comprise sliding guide means that are complementary to each other.

In this way, it is possible to have access to the dispensing unit from the front and to operate directly on the bayonet-coupling by which the collecting device is held.

The sliding guide means are oriented according to a sliding direction substantially parallel to the axis of the collecting device. Hence, one only vertical movement suffices to remove the covering element from the rest of the envelope.

Suitably, locking means are provided to keep the covering element in the access window occluding position, such as for instance elastic snap-locking means.

Preferably, the collecting device comprises at least one protruding handling portion to facilitate the positioning and the removal of said collecting device with respect to the dispensing unit. Besides facilitating the engagement and disengagement of the bayonet-coupling, this characteristic is more advantageous also from the point of view of health, as it allows the manipulation of the collecting device without touching the zones concerned by the passage of the dispensed beverages.

Advantageously, the covering element comprises guide means that loosely engage the protruding handling portion when the collecting device is correctly mounted. In this manner, a key-mechanism is obtained that prevents the access window from closing if the collecting device is not correctly mounted in the bayonet-coupling.

### Brief Description of the Drawings

Further advantages and characteristics of the present invention will be clearer thanks to the following description wherein reference is made to the attached drawings, wherein:
- Figure 1 shows a portion of a machine for beverage dispensing according to the present invention, in correspondence of the access window to the dispensing unit;
- Figure 2 is a perspective view of a covering element for a machine according to the present invention;
- Figure 3 is a perspective view of a collecting device for a machine according to the present invention;
- Figure 4 is another perspective view of the covering element of Figure 2; and
- Figure 5 is a view that shows the coupling between the collecting device of Figure 3 and the covering element of Figure 4.

### Modes for carrying out the Invention

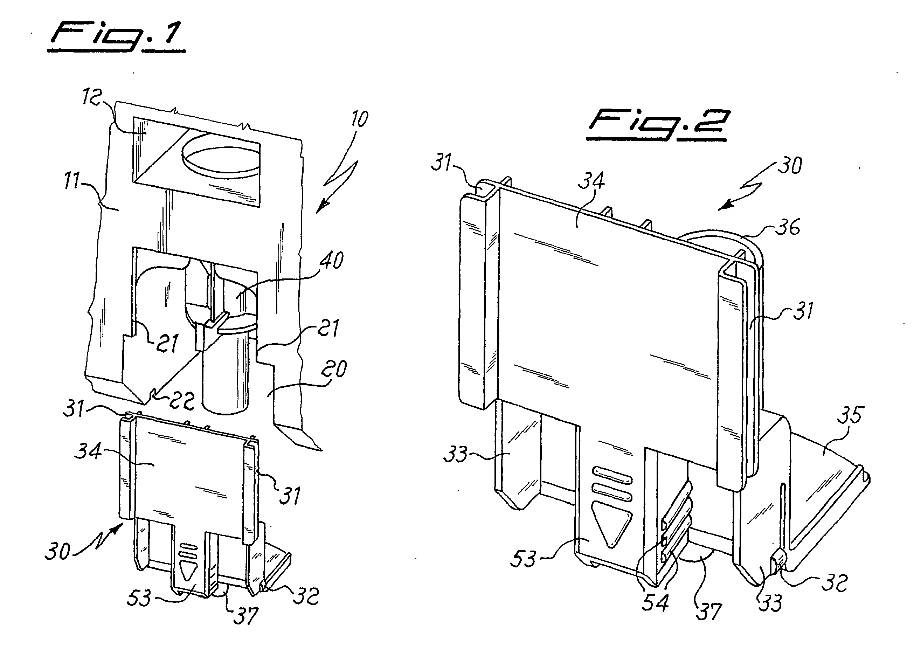

Figure 1 shows a portion of a machine for the preparation of beverages 10 in correspondence of window 20 allowing the access to the dispensing unit. For the sake of representation cleamess, some details have been omitted, for instance the bayonet-coupling wherein the collecting device 40 engages.

In the represented embodiment, envelope 11 of machine 10 also comprises an opening 12 allowing the insertion and the removal of a disposable cartridge (not shown) containing a preparation for the beverage to be dispensed.

In correspondence of the access window 20, envelope 11 comprises edge portions 21 placed on the opposite sides of the window, which are provided for engaging in a sliding manner the inside of guide grooves 31 obtained on the opposite sides of at least a first wall 34 of a covering element 30.

The restraining of the covering element 30 in the occluding position of the access window 20 is realized, for instance, by locking elastic snap-means. In the embodiment shown herein, the locking elastic snap-means are realized, for instance, with one or more protrusions 32 obtained on elastically deformable arms 33, intended for engaging in special seats 22 obtained in a suitable position in the inside of machine 10.

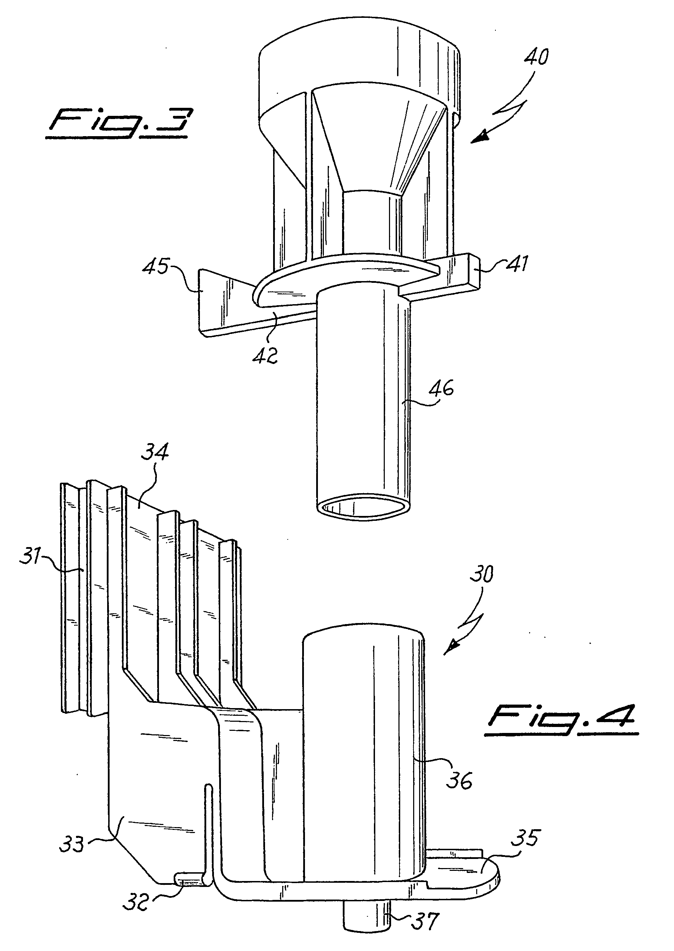

The covering element 30, shown with more details in Figures 2 and 4, which, for instance, may be realized from plastic material, comprises in particular a first substantially flat wall portion 34, parallel to the vertical axis of the collecting device 40 when the covering element 30 is slidingly engaged in the access window 20.

On the external front part of the covering element 30, below the first portion of wall 34, a handling portion 35 is obtained that is provided, for instance, with protruding ribs 54, to facilitate the manual operations of positioning and removing the covering element 30.

The covering element 30 also comprises a second wall portion 35 substantially perpendicular to the first wall portion 34. In the embodiment shown herein, the second wall portion 35 is integral with the first wall portion 34, but it is also possible to provide the wall portions as separate parts by providing means for connecting the separate parts in an articulated manner, or means allowing also the removable positioning of the part comprising the second wall portion 35.

The covering element 30 also comprises a tubular portion 36 having a through-hole whose axis is perpendicular to the second wall portion 35. The tubular portion 36 is composed of a duct that ends in a dispensing spout 37 wherefrom the prepared beverage comes out to be collected in a cup or a glass already placed under said spout.

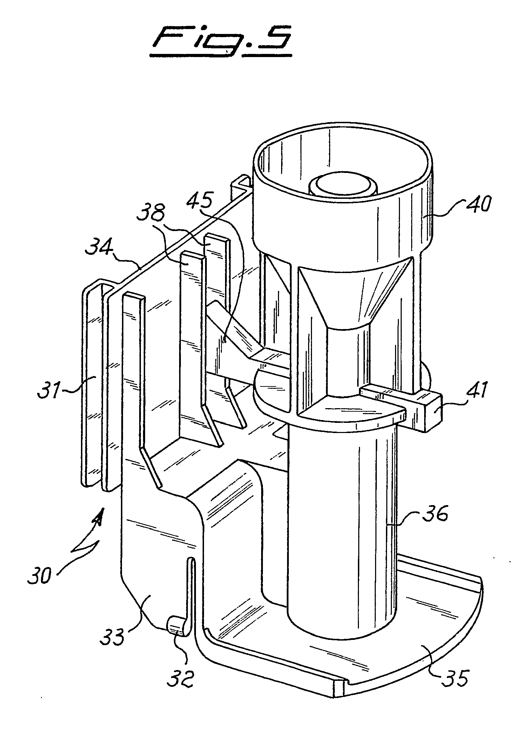

The tubular portion 36 has an internal diameter greater than the external diameter of the dispensing duct 46 (Figure 3) of the collecting device 40, in such a manner that, when the covering element 30 is in the position occluding the access window 20, the dispensing duct 46 is housed at least partly in the inside of the tubular portion 36.

The collecting device 40, shown with more details in Figure 3, is of the type intended for being engaged in a bayonet-coupling. A first protruding arm 41 of the bayonet coupling is therefore provided, while in a diametrically opposed position the second arm 42 of the bayonet coupling extends to form a protruding handling portion 45 that allows the manipulation of the collecting device 40 in an easier and health-safer manner.

Figure 5 shows the assembly composed of a covering element 30 and a collecting device 40 in a mutual coupling position, i.e. in the state where the covering element is in the position that occludes the access window 20. As can be observed, the covering element 30 advantageously comprises guide means, consisting for instance of a couple of flanges 38 that loosely engage the protruding handling portion 45 in such a manner as to realize a key-mechanism that prevents the covering element 30 from closing if the collecting device is not correctly mounted in the bayonet-coupling.

## Claims

1. A machine (10) for the preparation of beverages of the type comprising at least one dispensing unit housed in the inside of an envelope, said dispensing unit comprising at least one removable collecting device (40) whose access is through at least one access window (20) obtained in the envelope, and at least one removable covering element (30) to occlude or selectively free said access window, (20) **characterized in that** the access window (20) faces the collecting device, (40) and that said at least one covering element (30) and said at least one access window (20) comprise sliding guide means (31, 21) that are complementary to each other.

2. A machine according to claim 1, wherein said at least one removable covering element and said at least one access window comprise locking means for holding said covering element in the occluding position of said access window.

3. A machine according to claim 2, wherein said locking means are elastic snap-locking means.

4. A machine according to claim 1, wherein said at least one removable covering element comprises at least one substantially flat first wall portion, said at least one substantially flat first wall portion being parallel to the vertical axis of said collecting device when said covering element is slidingly engaged in said access window.

5. A machine according to claim 4, wherein said sliding guide means consist of at least a couple of grooves obtained on the opposite sides of said at least one first wall portion.

6. A machine according to claim 1, wherein said at least one covering element comprises a second wall portion substantially perpendicular to a first wall portion.

7. A machine according to claim 6, wherein said at least one covering element further comprises at least one tubular portion having a through-hole whose axis is perpendicular to said at least one second wall portion and suitable to house in its inside at least part of the beverage dispensing duct of said collecting device.

8. A machine according to claim 1, wherein said collecting device is removably mounted in said dispensing unit by means of a bayonet-coupling, and wherein said collecting device comprises at least one protruding handling portion, to facilitate the positioning and the removal of said collecting device with respect to said dispensing unit.

9. A machine according to claim 8, wherein said at least one covering element comprises guide means that loosely engage said at least one protruding handling portion when said collecting device is correctly mounted.

10. A machine according to claim 1, wherein said sliding guide means complementary to each other are oriented according to a sliding direction substantially parallel to the axis of said collecting device.

## Patentansprüche

1. Maschine (10) für die Zubereitung von Getränken des Typs umfassend zumindest eine Ausgabeeinheit, die im Innern eines Gehäuses untergebracht ist, wobei die genannte Ausgabeeinheit zumindest eine abnehmbare Sammelvorrichtung (40), deren Zugang über zumindest ein Zugangsfenster (20) erfolgt, das im Gehäuse vorgesehen ist, und zumindest eine abnehmbare Abdeckung (30) aufweist, um das genannte Zugangsfenster (20) zu verschließen oder freizulegen, **dadurch gekennzeichnet, dass** das genannte Zugangsfenster (20) der Sammelvorrichtung (40) zugewandt ist und dass die genannte zumindest eine Abdeckung (30) und das genannte zumindest eine Zugangsfenster (20) Schiebeführungsmittel (31, 21) umfassen, die zueinander komplementär sind.

2. Maschine nach Anspruch 1, wobei die genannte zumindest eine Abdeckung und das genannte zumindest eine Zugangsfenster Verriegelungsmittel umfassen, um die genannte Abdeckung in der Verschlussposition des genannten Zugangsfensters zu halten.

3. Maschine nach Anspruch 2, wobei die genannten Verriegelungsmittel elastische Schnappschlossmittel sind.

4. Maschine nach Anspruch 1, wobei die genannte zumindest eine abnehmbare Abdeckung zumindest einen im wesentlichen flachen ersten Wandabschnitt umfasst, wobei der genannte zumindest eine im wesentlichen flache erste Wandabschnitt parallel zu der Vertikalachse der genannten Sammelvorrichtung ist, wenn die genannte Abdeckung verschiebbar mit dem genannten Zugangsfenster im Eingriff ist.

5. Maschine nach Anspruch 4, wobei die genannten Schiebeführungsmittel zumindest aus einem Paar von Nuten bestehen, die auf gegenüberliegenden Seiten des genannten zumindest einen ersten Wandabschnitts vorgesehen sind.

6. Maschine nach Anspruch 1, wobei die genannte zumindest eine Abdeckung einen zweiten Wandabschnitt umfasst, der im wesentlichen senkrecht zum ersten Wandabschnitt ist.

7. Maschine nach Anspruch 6, wobei die genannte zumindest eine Abdeckung darüber hinaus zumindest einen rohrförmigen , Abschnitt mit einer Durchgangsbohrung umfasst, deren Achse senkrecht zu dem genannten zumindest einen zweiten Wandabschnitt und geeignet ist, in ihrem Innern zumindest einen Teil der Getränkeausgabeleitung der genannten Sammelvorrichtung aufzunehmen.

8. Maschine nach Anspruch 1, wobei die genannte Sammelvorrichtung abnehmbar in der genannten Ausgabeeinheit mittels eines Bajonettverschlusses befestigt ist und wobei die genannte Sammelvorrichtung zumindest einen vorstehenden Handhabungsabschnitt aufweist, um das Positionieren und das Abnehmen der genannten Sammelvorrichtung in Bezug auf die genannte Ausgabeeinheit zu erleichtern.

9. Maschine nach Anspruch 8, wobei die genannte zumindest eine Abdeckung Führungsmittel umfasst, die lose mit dem genannten zumindest einen vorstehenden Handhabungsabschnitt zusammenwirken, wenn die genannte Sammelvorrichtung ordnungsgemäß aufgesteckt ist.

10. Maschine nach Anspruch 1, wobei die genannten zueinander komplementären Schiebeführungsmittel gemäß einer Verschieberichtung ausgerichtet sind, die im wesentlichen parallel zu der Achse der genannten Sammelvorrichtung ist.

## Revendications

1. Machine (10) pour préparer des boissons du type comprenant au moins un module de distribution logé à l'intérieur d'une enveloppe, ledit module de distribution comprenant au moins un dispositif de collecte extractible (40) dont l'accès s'effectue à travers une fenêtre d'accès (20) ménagée dans l'enveloppe, et au moins un élément de recouvrement amovible (30) prévu pour obturer ou libérer sélectivement ladite fenêtre d'accès (20), **caractérisée en ce que** la fenêtre d'accès (20) fait face au dispositif de collecte (40), et **en ce que** ledit ou chaque élément de recouvrement (30) et ladite ou chaque fenêtre de collecte (20) comprend des moyens de guidage coulissants (31, 21) qui sont mutuellement complémentaires.

2. Machine selon la revendication 1, dans laquelle ledit ou chaque élément de recouvrement amovible et ladite ou chaque fenêtre d'accès comprennent des moyens de blocage pour maintenir ledit élément de recouvrement dans la position d'obturation de ladite fenêtre d'accès.

3. Machine selon la revendication 2, dans laquelle lesdits moyens de blocage sont des moyens à enclenchement élastique.

4. Machine selon la revendication 1, dans laquelle ledit ou chaque élément de recouvrement comprend au moins une première paroi sensiblement plane, ladite ou chaque paroi sensiblement plane étant parallèle à l'axe vertical dudit dispositif de collecte lorsque ledit élément de recouvrement est mis en prise par coulissement dans ladite fenêtre d'accès.

5. Machine selon la revendication 4, dans laquelle lesdits moyens de guidage coulissants consistent en au moins une paire de rainures ménagées sur les faces opposées de ladite ou de chaque paroi.

6. Machine selon la revendication 1, dans laquelle ledit ou chaque élément de recouvrement comprend une seconde paroi sensiblement perpendiculaire à une première paroi.

7. Machine selon la revendication 6, dans laquelle ledit ou chaque élément de recouvrement comprend au moins une partie tubulaire comportant un trou débouchant dont l'axe est perpendiculaire à ladite ou chaque seconde paroi et adapté pour recevoir intérieurement au moins une partie du conduit de distribution de boisson dudit dispositif de collecte.

8. Machine selon la revendication 1, dans laquelle ledit dispositif de collecte est monté de manière amovible dans ledit module de distribution par un accouplement à baïonnette, et dans laquelle ledit dispositif de collecte comprend au moins une partie saillante pour la manutention, destinée à faciliter le positionnement et le retrait dudit dispositif de collecte par rapport audit module de distribution.

9. Machine selon la revendication 8, dans laquelle ledit ou chaque élément de recouvrement comprend des moyens de guidage qui sont engagés de façon lâche avec ladite ou chaque partie saillante pour la manutention lorsque ledit dispositif de collecte est correctement monté.

10. Machine selon la revendication 1, dans laquelle lesdits moyens de guidage coulissants mutuellement complémentaires sont orientés suivant un sens de coulissement sensiblement parallèle à l'axe dudit dispositif de collecte.
